# EUROPEAN PATENT APPLICATION

(11) **EP 1 609 574 A1**
(43) Date of publication of application: **28.12.2005**
(21) Application number: 04380132.3
(22) Date of filing: 23.06.2004
(51) Int. Cl.: B29C 37/00, B29C 71/02, B29C 45/14, B29C 51/14

(54) **System and method for manufacturing plastic parts with textile covering**

(71) Applicant: Grupo Antolin Ingenieria, S.A., 09007 Burgos (ES)
(72) Inventor: Rodrigo Perez, José Francisco, 09007 Burgos (ES); Garcia Gutierrez, Francisco javier, 09007 Burgos (ES)
(74) Representative: Esteban Perez-Serrano, Maria Isabel

(57) **Abstract**

A system and methods for manufacturing plastic parts with textile covering. The system includes a mold (10) having at least one fixed portion (102), at least one movable portion (101), a first surface (100) facing the textile covering, a second surface (110) exterior to the first surface (100). The system is characterized in that it comprises at least one air inlet (11) connectable to a source of compressed air for providing air to heating means (12) for heating air coming from the air inlet (11) and producing hot air, at least one air outlet (14) for air coming from the heating means (12), situated in the first surface (100) of at least one of the portions (101, 102) of the mold (10), and conduction means (13) for conducting the hot air from the heating means (12) to each air outlet (14). The method comprises injecting hot air over the part in areas of textile covering.

## Description

### Field of the Invention

The invention is included within the field of systems, machines, molds and processes for manufacturing plastic parts coated with a textile covering during the manufacturing process.

### Background of the Invention

In the processes of manufacturing plastic parts with a covering or coating, when it is of a textile type, the covering is formed by several layers, although it is simply called fabric or sandwich. One layer is the fabric itself and another is of a material protecting it from the pressure and temperature of the plastic; in some cases a foam layer is added to give a cushioned sensation.

One of the processes of manufacturing parts coated with fabric is in injection molds and, particularly, the so-called low pressure injection molds. During these processes, wrinkles are generated in the fabric, which are manifested in the part after the injection and its removal from the mold. The wrinkles are caused by differences in elongations among different components of the sandwich and their behavior in the areas of greater deep drawing of the part.

The wrinkles can be eliminated adjusting the injection parameters in molds in which the degree of deep drawing is low, and even in those cases and given the variability of the process itself and of the raw material on certain occasions is necessary to eliminate the remaining wrinkles outside of the mold. This becomes more necessary in the molds in which the deep drawing is greater, since the adjustments in the injections parameters are not enough.

Once the part is removed from the mold, the wrinkles can be eliminated by means of the application of hot air on the wrinkles themselves, by means of various methods, such as infrared resistors or steam, but in any case implies an additional operation which must be carried out during the manufacturing cycle time of the part in the machine, and outside thereof, implying a work station and additional tools added to said machine.

Likewise, the elimination of these defects generates others by trying to eliminate the wrinkle, since the part can be burned by an excessive manual (not controlled) heat application during the adjustment of the resistors or in any other operation related with this process.

The systems known in the state of the art can be found in the following patent documents:
US 6,405,461, which discloses a system and process for eliminating the wrinkles from seats in the formed part, and therefore, as an operation added to the process of manufacturing the part.
JP 4,031,218, showing a system for eliminating deformations and wrinkles on non-coated plastic parts by means of hot air, manufactured by vacuum thermoforming. The material to be formed and softened with hot air is a thin film of a thermoplastic material.
In JP 2,171,223 and JP 10,291,217, pressure and heat are applied only to the coating, inside the mold and before the injection.
In JP 11,129,285, the process is carried out inside the mold, with the coating being placed, formed by pressure and vacuum before or during the injection cycle.

The problem to be solved by the present invention consists of eliminating the wrinkles in a plastic part with textile coating inside the machine and during the manufacturing process, since in the mentioned examples the application of the methods is carried out before or after the manufacturing cycle of the part, implying an added process time.

### Description of the Invention

Therefore, the object of the invention is the elimination of the wrinkles from the coating on the plastic part inside the mold and during the manufacturing cycle time of the part, such that when the part is removed from the mold, it does not need the subsequent elimination of the wrinkles by any means, which in addition to reducing the defect (both directly: wrinkles, and indirectly: shines, burns), decreases the labor cost and power consumption, as well as the necessary auxiliary elements implying an additional cost in its obtainment and subsequent maintenance.

A first aspect of the invention refers to a system for manufacturing plastic parts with textile covering or coating, which allows for preventing a series of defects usually occurring in these parts, typically wrinkles, including a mold having at least one fixed portion, at least one movable portion, a first surface facing the textile covering and a second surface exterior to the first surface. The system comprises
at least one air inlet connectable to a source of compressed air for providing air to:
heating means for heating air from the air inlet and producing hot air;
at least one air outlet for air coming from the heating means, situated in the first surface of at least one of the portions of the mold;
conduction means for conducting hot air from the heating means to each air outlet.
Said heating means comprise:
a plurality of air conduits or ducts through which the air from the inlet is made to pass; and
a plurality of heater means situated next to the air conduits in order to heat the air passing though said conduits.

The conduits comprise straight axial end runs, interior runs according to the major axis of the tubes being understood as axial, and at least one intermediate run of helical trajectory for creating turbulences and reaching a suitable temperature and speed in the air.

The invention furthermore comprises blocking means which can be constituted of a valve, situated in each air outlet to control and distribute expulsion of air.

These blocking means comprise:
a plunger or piston movable between an open position and a closed position, having a first end and a second end, so that the first end allows expulsion of hot air in the open position, and blocks expulsion of hot air in the closed position;
elastic means having an elastic strength for driving the plunger or piston towards the closed position and for being overcome when the pressure of the hot air exceeds the elastic strength;
anti-rotation means for preventing a rotation of the plunger or piston between its open and closed positions.

Optionally, the blocking means can be incorporated in an attachment which is coupled in the mold.

The heating means can be located in the mold itself, in the second surface of the mold, or they can be situated outside of the mold. In the event that they are situated outside of the mold, the heating means can be shared by several machines, or they can provide hot air only to one machine. On the other hand, the heating means can incorporate insulating means.

Likewise, the conduction means or conduits can run inside the mold, outside the mold or they can have some runs on the inside and other runs on the outside.

A second aspect of the invention refers to methods for manufacturing plastic parts with textile covering or coating according to the system of the invention, comprising injecting hot air in the part in areas of the textile covering.

According to these methods of the invention, the material can be provided by means of different manufacturing processes common in the elaboration of this type of parts. Among others, the material can be provided by means of an injection process or by means of a thermoforming process.

Thus, the part can be manufactured by providing the material by means of an injection process comprising the steps:
a) placing and securing the textile covering between the fixed and movable portions of the mold, in the cavity where the part is going to be formed, so that said covering is parallel to the surfaces of said portions of the mold;
b) closing the mold to form the covering adapting it to a geometry defined by the fixed and movable portions of the mold;
c) injecting and compacting the material of the part to be formed on the already placed covering;
d) cooling with the mold closed;
e) opening the mold during the cooling step so that the part with the covering remains secured in the portion of the mold opposite to the one having the air outlets;
f) injecting hot air on the areas of the covering where the defect is to be eliminated;
g) opening the mold;
h) ejecting the part.

The part can also be manufactured by providing the material in sheet form by means of a thermoforming process comprising the steps of:
a) placing and securing the textile covering between the fixed and movable portions of the mold, in the cavity where the part is going to be formed, so that said covering is parallel to the surfaces of said portions of the mold;
b) placing the sheet material of the part to be formed with the already placed covering;
c) closing the mold to form the covering and the material adapting them to a geometry defined by the fixed and movable portions of the mold;
d) cooling with the mold closed;
e) opening the mold during the cooling step so that the part with the covering remains secured in the portion of the mold opposite to the having the air outlets;
f) injecting hot air on the areas of the covering where the defect is to be eliminated;
g) opening the mold;
h) ejecting the part.

### Brief Description of the Drawings

A series of drawings helping to better understand the invention and specifically relating to an embodiment of said invention, shown as a non-limiting example thereof, is very briefly described below.
Figure 1 shows a scheme of a profile view of a mold of the system according to the present invention.
Figure 2 shows a perspective view of the heating means coupled in a mold.
Figure 3 shows a side view of the heating means coupled in a mold.
Figure 4 shows a section of the heating means.
Figure 5 shows a section of the air outlet showing the blocking means in a closed position.
Figure 6 shows a section of the air outlet showing the blocking means in an open position.
Figure 7 shows a scheme of an injection process according to the present invention.
Figure 8 shows a scheme of a thermoforming process according to the present invention.

### Description of a Preferred Embodiment of the Invention

As previously mentioned, the present invention allows for eliminating the wrinkles inside the mold and during the manufacturing cycle of the part. This eliminates tools and operations subsequent to the manufacturing cycle inside the machine, with the resulting saving of time, space, investment and maintenance, in addition to an increase of the quality by controlling the parameters of the applied air.

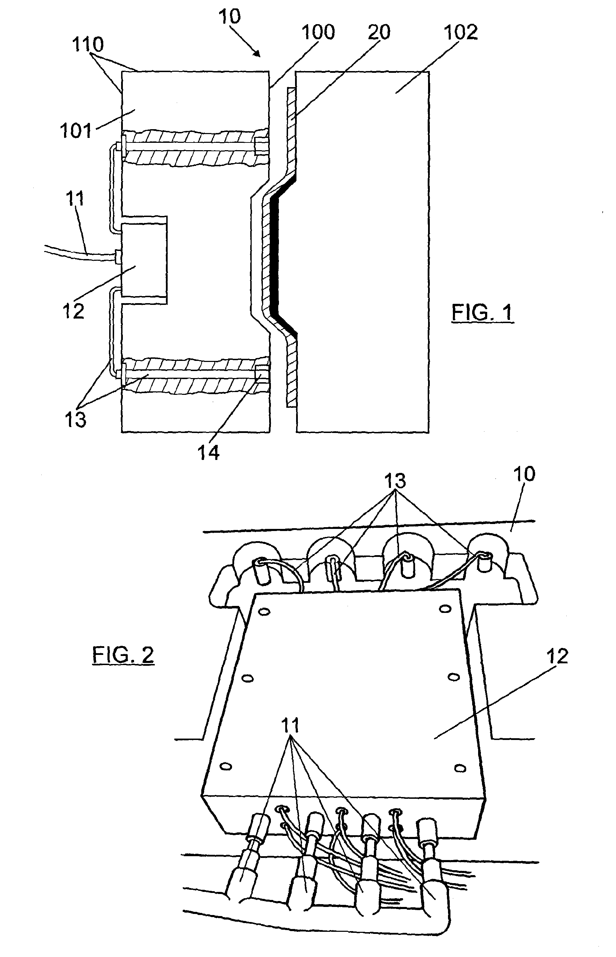

Figure 1 shows a general view of the system placed in the movable portion 101 of an injection mold 10. The plastic parts 20 coated with fabric manufactured by injection are arranged with the non-visible side towards the fixed portion 102 of the mold 10, where the plastic is injected, and the visible side of the part 20 and where the covering or coating is placed on the movable portion 101 of the mold 10, as shown throughout this explanation.

Generally, the systems consists of the parts shown in Figure 1:
- air inlet 11: air supply conduit,
- heating means 12 for heating the air
- hot air conduit run 13 outside of the mold 10: from the heating means 12 to the conduit inside the mold 10,
- hot air conduit run 13 inside the mold 10,
- valve 16, element for the distribution of hot air on the part.

These elements are mentioned and described in detail below.

The air inlet 11 is a conduit from the air supply (system or tanks), to the inlet to the heating means 12. Their purpose is to conduct the air under supply pressure and temperature to the heating means 12.

The heating means 12 constitute the device raising the temperature of the air for its introduction inside the mold 10 and from there to the part. Said heating means 12 can be located in the mold 10 itself, in the second surface 110, or situated outside of the mold.

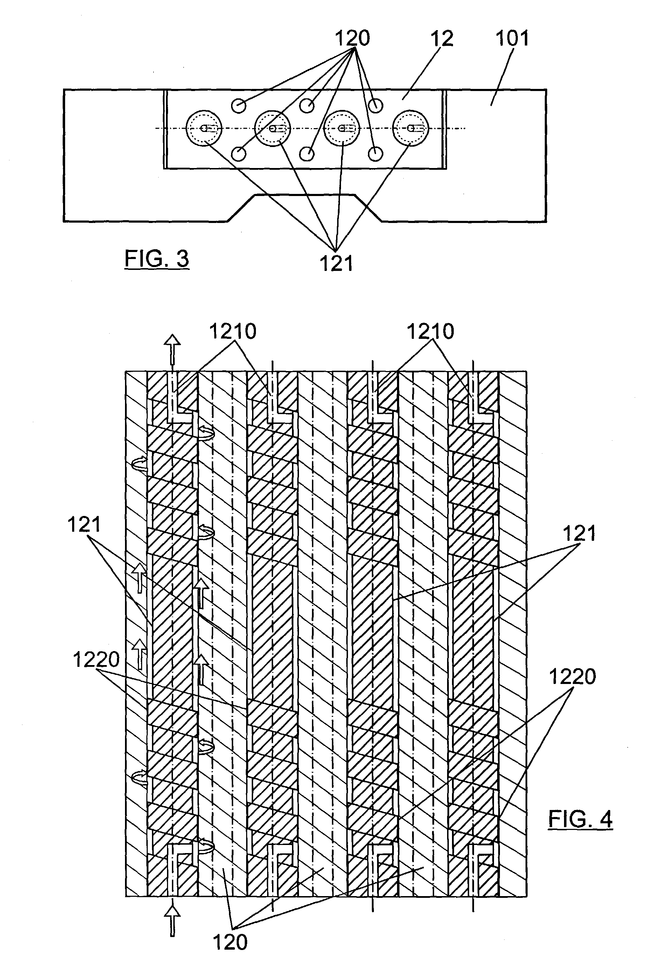

Figure 2 shows a detail of the heating means 12 of the invention. The means can be constituted of an aluminum box with air inlets and outlets, and an insulating element on the outside. Mica sheets can be used as an insulator, but this can be any other material.

In Figure 2, on the closest side of the box, four air inlets 11 can be seen, the air coming from the supply, and on the opposite side four copper pipes 13 can be seen, entering in the mold 10. These pipes 13 conduct hot air towards the mold 10, which pipes enter in the mold 10 finishing off in the valves 16.

In the same manner, six pairs of cables are shown on this side of the box where the air supply enters, three next to the upper edge and three next to the lower edge. All these correspond to the electrical cables of the resistors existing inside the box for heating the air.

In Figure 3, a profile view of the box placed in the mold 10 is seen. To be able to clamp the mold 10 to the injection machine, it is necessary to maintain the surface of the mold 10 in contact with the completely planar machine. To that end, it is necessary to carry out a housing in the mold 10 for placing the heating means 12 inside and to be certain that they do not project above the clamping surface of the mold 10.

Figure 4 shows a section of the heating means 12, in which airflow directing elements 121 (in a form similar to a screw) and three resistors 120 (in Figure 3, the six resistors are clearly distinguished) can be seen. The airflow directing elements 121 have a cylindrical shape and are provided with a helical groove 1220 for conducting the air and creating sufficient turbulences so that the air reaches the part with the suitable temperature and speed. The air is introduced through the center at an end 1210 of the flow directing element and passes through the helical groove 1220 until exiting through the center of the opposite end 1210 of said flow directing element 121. In this path, the air increases the temperature while at the same time obtains the speed and conditions sufficient for being introduced inside the mold 10. Air inlet and outlet pressure in each flow directing element 121 is similar and equal to that of air supply, normally 6 bar.

A conduit which will correspond to a hot air outlet 14 onto the surface of the part comes from each flow directing element. That is to say, one flow directing element 121 of the heating means 12 corresponds to each point on the part where hot air is to be insufflated to eliminate wrinkles.

On the final end of the conduits 13 constituted of pipes, the conduits form a stop with the valve 16. The pipes are of copper and are surrounded with an insulation 13a for preventing temperature loss to the valve 16.

The valves 16 are the devices for distributing hot air on the part 20. The valves 16 comprise a plunger or piston 160, having a first end 160a and a second end 160b, said plunger or piston 160 being movable between an open position and a closed position. The valves 16 also comprise elastic means 161, which can be constituted of a spring 163 for pushing the piston 160 towards the closed position. The number of valves 16 will depend on the areas where the hot air for eliminating the wrinkles is to be introduced, and they are adapted to the geometry of the part, since they form part of the side of the part (first surface 100) of the movable portion 101 of the mold 10. Due to this, they must always maintain the same position, which is assured by means of an anti-rotation system 162, which is constituted of a screw running inside a longitudinal channel along the valve 16 to allow for the movement thereof and to prevent its rotation.

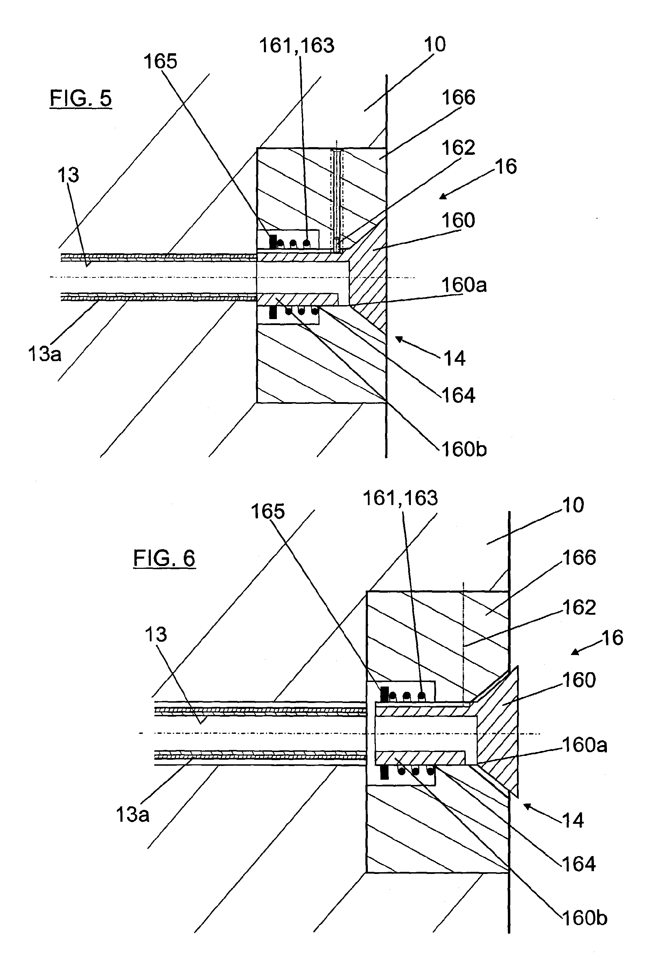

For the simplicity of manufacture and repair, the valves can be placed inside an independent block or attachment 166, which is placed inside the mold 10 by any known means or combination thereof: under pressure, adhered, screwed, etc. The valves 16 consist of a hollow cylindrical portion connected with a solid cone frustum. A lock washer 165 is placed on its cylindrical portion, forming a stop or second support against a spring 163, the first support 164 of which is in the attachment 166 or in the mold 10 itself in the event of not using the attachment 166. When hot air is introduced, the pressure of the latter makes the valve 16 advance, allowing the air going inside the cylindrical portion to pass to the periphery of the frustoconical portion through an opening, and from there to the surface of the part 20 where the wrinkle is situated. After the air stops acting, the pressure decrease allows for recovering the initial position by means of the force of the spring 163. The advanced valve position is shown in Figure 6.

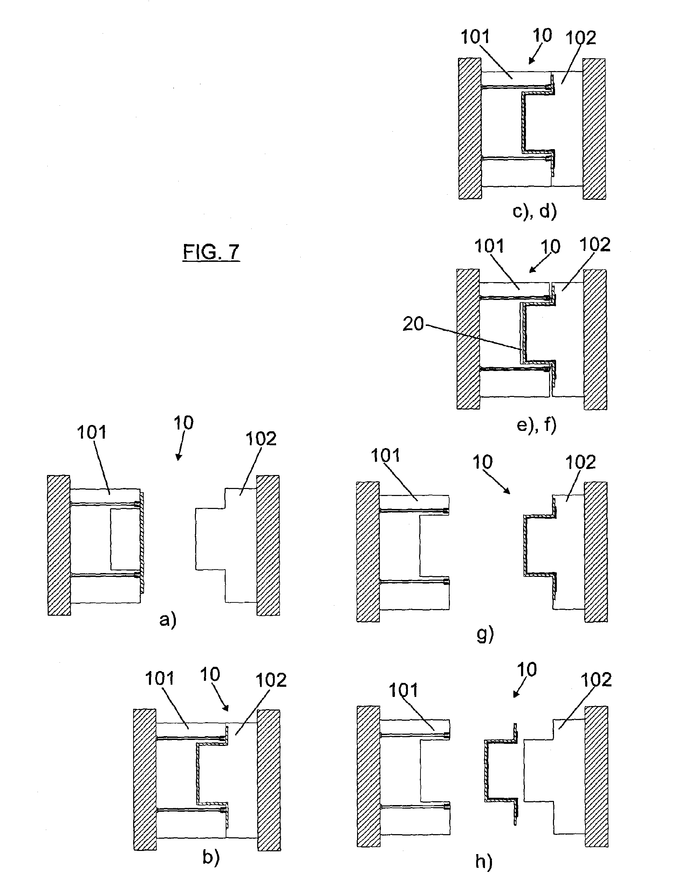

Figure 7 schematically shows the sequence of the steps comprising an injection method for manufacturing plastic parts with textile covering in which the system of the invention is used:
In the first place, the fabric is placed inside the mold, placing and securing the part to be formed in the system; then, the system is closed and the material of the part to be formed is injected and compacted. After cooling with the closed system, the cooling continues with a minimum opening of the mold, the hot air also being injected at this moment on the formed surface; the air outlets though the valves 16 are directed towards the areas where the defect of the formed surface is to be eliminated, i.e., in the areas where the probability of wrinkle formation is higher. Next, the system is opened in order to allow the removal of the part.

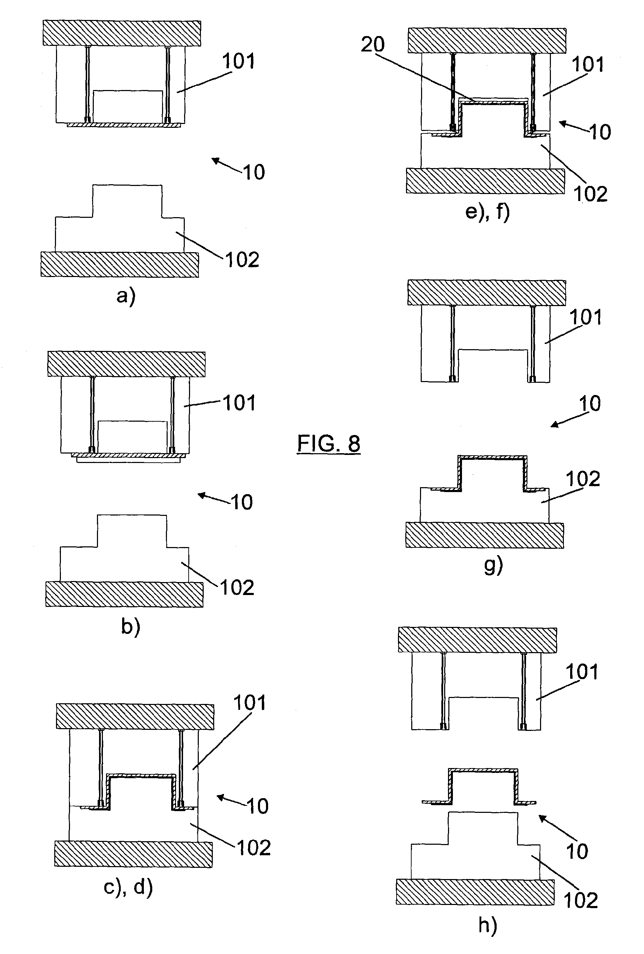

Figure 8 schematically shows the sequence of the steps comprising a thermoforming method for manufacturing plastic parts with textile covering in which the system of the invention is used:
First, the fabric is positioned inside the mold, placing and securing the part to be formed in the system; then, the sheet material of the part to be formed is placed, and the system is closed. The remaining steps are common with the manufacturing process by injection, i.e.: after cooling with the closed system, the cooling continues with a minimum opening of the mold, the hot air also being injected at this moment on the formed surface; the air outlets through the valves 16 are directed towards the areas where the defect of the formed surface is to be eliminated, i.e., in the areas where the probability of wrinkle formation is higher. Next, the system is opened to allow the removal of the part.

## Claims

1. A system for manufacturing plastic parts with textile covering including a mold (10) having:
at least one fixed portion (102);
at least one movable portion (101);
a first surface (100) facing the textile covering;
a second surface (110) exterior to the first surface (100);
**characterized in that** said system comprises
at least one air inlet (11) connectable to a source of compressed for providing air to heating means (12) for heating air from the air inlet (11) and producing hot air;
at least one air outlet (14) for air coming from the heating means (12), situated in the first surface (100) of at least one of the portions (101, 102) of the mold (10);
conduction means (13) for conducting the hot air from the heating means (12) to each air outlet (14).

2. The system of claim 1, **characterized in that** the heating means (12) comprise:
a plurality of conduits (121) through which the air from the air inlet (11) is made to pass; and
a plurality of heater means (120) situated next to the conduits (121) for heating the air passing though said conduits (121).

3. The system of claim 2, **characterized in that** the conduits (121) comprise straight axial end runs (1210) and at least one intermediate run of helical trajectory (1220) for creating turbulences and reaching a suitable temperature and speed in the air.

4. The system of any of claims 1-3, **characterized in that** it further comprises blocking means (16) situated in each air outlet (14) to control and distribute expulsion of the air.

5. The system of claim 4, **characterized in that** the blocking means (16) comprise:
a piston (160)
movable between an open position and a closed position,
having a first end (160a) and a second end (160b), so that the first end (160a) allows expulsion of hot air in the open position and blocks expulsion of hot air in the closed position;
elastic means (161) having an elastic strength to drive the piston (160) towards the closed position and to be overcome when the pressure of the hot air exceeds the elastic strength;
anti-rotation means (162) to prevent a rotation of the piston (160) between its open and closed positions.

6. The system of claim 5, **characterized in that** the elastic means (161) comprise a compressed spring (163) arranged between a first support (164) and a second support (165) solidly fixed to the second end (160b) of the piston (160).

7. The system of any of claims 5-6, **characterized in that** the blocking means (16) are incorporated in an attachment (166) which is coupled in the mold (10).

8. The system of any of claims 1-7, **characterized in that** the heating means (12) are situated in a position selected between outside of the mold (10) and in the second surface (110) of the mold (10).

9. The system of any of claims 1-8, **characterized in that** the heating means (12) comprise insulating means.

10. The system of any of claims 1-9, **characterized in that** the conduction means (13) comprise a run selected between inside of the mold (10), outside of the mold (10) and combinations thereof.

11. A method for manufacturing plastic parts with textile covering according to the system of any of claims 1-10, comprising injecting hot air over the part in areas of textile covering.

12. The method of claim 11, **characterized in that** the part is manufactured by providing material by means of an injection process comprising the steps:
a) placing and securing the textile covering between the fixed portion (102) and movable portion (101) of the mold (10), so that said covering is parallel to the first surface (100);
b) closing the mold (10) to form the covering adapting it to a geometry defined by the fixed portion (102) and movable portion (101) of the mold (10);
c) injecting and compacting the material of the part to be formed on the already placed covering;
d) cooling with the mold (10) closed;
e) opening the mold (10) during the cooling step so that the part with the covering remains secured in the portion of the mold opposite to the one having the air outlets (14);
f) injecting hot air on the covering;
g) opening the mold (10);
h) ejecting the part.

13. The method of claim 11, **characterized in that** the material is provided in sheet form by means of a thermoforming process comprising the steps:
a) placing and securing the textile covering between the fixed portion (102) and movable portion (101) of the mold (10), so that said covering is parallel to the first surface (100);
b) placing the sheet material of the part to be formed with the already placed covering;
c) closing the mold (10) to form the covering and the material adapting them to a geometry defined by the fixed portion (102) and movable portion (101) of the mold (10);
d) cooling with the mold (10) closed;
e) opening the mold (10) during the cooling step so that the part with the covering remains secured in the portion of the mold opposite to the one having the air outlets (14);
f) injecting hot air on the covering;
g) opening the mold (10);
h) ejecting the part.
